# EUROPEAN PATENT SPECIFICATION

(11) **EP 1 202 914 B1**
(45) Date of publication and mention of the grant of the patent: **23.06.2004**
(21) Application number: 00922234.0
(22) Date of filing: 14.04.2000
(51) Int. Cl.: B65D 23/00, B32B 27/30, B32B 27/32, B32B 27/34, B32B 27/08, B65D 65/40, C08L 23/10, B32B 27/18, B65D 1/02

(54) **TRANSPARENT MULTILAYER POLYPROPYLENE CONTAINER WITH BARRIER PROTECTION**
DURCHSICHTIGER MEHRSCHICHTBEHÄLTER MIT SPERRSCHUTZ
RECIPIENT DE POLYPROPYLENE TRANSPARENT A COUCHES MULTIPLES AVEC BARRIERE DE PROTECTION

(30) Priority: 16.04.1999 US 293401; 30.03.2000 US 539529
(43) Date of publication of application: 08.05.2002
(73) Proprietor: Pechiney Emballage Flexible Europe, 92843 Rueil Malmaison Cedex (FR)
(72) Inventor: CURIE, Kevin, James, Appleton, WI 54914 (US); DAVIDSON, Randolph, Lee, Menasha, WI 54952 (US); EMRE, Sahin, Appleton, WI 54915 (US)
(74) Representative: Hill, Justin John
(86) International application number: PCT/US2000/010153
(87) International publication number: WO 2000/063085

(56) References cited:
- EP-A- 0 407 880
- WO-A-94/23941
- WO-A-96/05110
- US-A- 4 198 327
- US-A- 4 451 512
- US-A- 4 501 797
- US-A- 4 552 714
- US-A- 4 619 849
- US-A- 4 705 708
- US-A- 5 035 933
- US-A- 5 068 077
- US-A- 5 202 192
- US-A- 5 314 987
- US-A- 5 693 283

## Description

### 1. Field of the Invention.

This invention relates generally to transparent multilayer containers; specifically, to transparent multilayer containers having at least one layer of polypropylene and a layer of a barrier material which provides oxygen, carbon dioxide and moisture protection.

### 2. Background Art.

Many products that can be stored in plastic containers require carbon dioxide, oxygen and moisture barrier protection to keep the products fresh for extended periods of time. Such products include, by way of example only, certain carbonated beverages, fruit juices, beer, sauces, ketchup, jams, jellies and dry foods such as instant coffee and spices. Most commercially acceptable transparent multilayer containers that provide carbon dioxide and oxygen barrier protection are made of at least one layer comprising a polyester such as polyethylene terephthalate ("PET") and a layer comprising ethylene vinyl alcohol copolymer ("EVOH"). The layer of EVOH in such containers provides excellent carbon dioxide and oxygen barrier protection. EVOH can also act as a chemical or fragrance barrier to keep flavors fresh for various products such as orange juice.

PET has limited moisture barrier protection compared with polypropylene. As a result, liquid products stored in PET containers experience moisture loss resulting in product weight loss. Also, dry products stored in PET containers are allowed to absorb more moisture than products stored in polypropylene containers. In addition, PET bottles have limited hot fill capabilities due to a low glass transition temperature of PET. Moreover, the injection molding process temperatures of PET and EVOH are significantly different thus creating difficulties in molding these two materials together in, for instance, multi-layer injection molding systems.

It is known to use polypropylene, instead of PET, for an inner and outer layer of multilayer containers in extrusion blow molding applications. One advantage of polypropylene over PET is that polypropylene better withstands the high temperatures associated with hot fill products. Furthermore, the melt temperature of most commercial grade polypropylene is substantially closer to that of EVOH when compared to the melt temperature of PET. Coinjection or coextrusion of polypropylene and EVOH is thus substantially easier than coinjection or coextrusion of PET and EVOH, as will be understood by one of ordinary skill in the art.

It is also known that biaxial orientation of polypropylene, such as by traditional reheat stretch blow molding processes, may be employed to produce clear polypropylene structures. Similarly, clarification of some barrier materials such as EVOH and nylon may also be accomplished by orientation as is known in the art. Unfortunately, however, traditional polypropylene does not readily bond to EVOH or nylon without the assistance of an additional agent. Failure to bond an internal layer of EVOH or nylon to structural layers of polypropylene will become obvious to the naked eye and detract from the clarity of a resulting structure. As a result, known containers made with polypropylene and EVOH require a layer of an adhesive between each layer of polypropylene and the layer of EVOH to assure interlayer adhesion. Accordingly, multilayer polypropylene containers with carbon dioxide and oxygen barrier protection have typically had at least five layers of material: a first layer of polypropylene, a first layer of adhesive, a layer of EVOH, a second layer of adhesive and a second layer of polypropylene.

Additionally, known polypropylene containers with barrier protection have haze values of approximately 29%-35% or greater due, at least in part, to the addition of an adhesive or compatibilizer to facilitate or promote bonding between the polypropylene and EVOH. While it is known to injection stretch blow mold containers with a single layer of clarified polypropylene to make a transparent bottle having lower haze values, such containers do not have many commercial purposes for food applications because they do not provide significant carbon dioxide or oxygen barrier protection.

### SUMMARY OF THE INVENTION

The invention in its various embodiments is as set out in the accompanying claims.

The transparent containers of the present invention have a first layer being an innermost or outermost layer comprising polypropylene and a layer comprising an oxygen barrier material such as ethylene vinyl alcohol copolymer, nylon or blends thereof, directly adjacent to the polypropylene layer wherein at least the polypropylene layer comprises an adhesive mixed therein.

It is one of the principal objectives of the present invention to provide multilayer plastic containers that also provide oxygen, carbon dioxide and moisture barrier protection having a haze value of less than 25%.

It is another object of the present invention to provide containers having a layer of a propylene/adhesive mixture and a layer of gas barrier material directly adjacent the layer of polypropylene/adhesive mixture.

It is another object of the present invention to provide clear, commercially acceptable, cost effective containers having a layer comprising polypropylene and a layer comprising a gas barrier material adjacent to the polypropylene layer, wherein the containers may be used for carbonated beverages, fruit juices, sauces and beer.
It is still another object of the present invention to provide a polypropylene bottle having at least two layers and having a haze value of less than 25%.

It is further an object of the present invention to comprise a structure of two different materials with similar melting temperatures to provide more compatible injection molding systems.

It is yet an additional object of the present invention to provide a polypropylene container having good gas barrier protection as well as high clarity and gloss.

### BRIEF DESCRIPTION OF DRAWINGS

FIG. 1 is a perspective view of a multilayer container according to the present invention.
FIG. 2 is a sectional view of a wall of the container shown in FIG. 1.
FIG. 3 is a perspective view of a preform according to the present invention from which the multilayer container of the present invention is constructed.

### DETAILED DESCRIPTION OF THE DRAWINGS

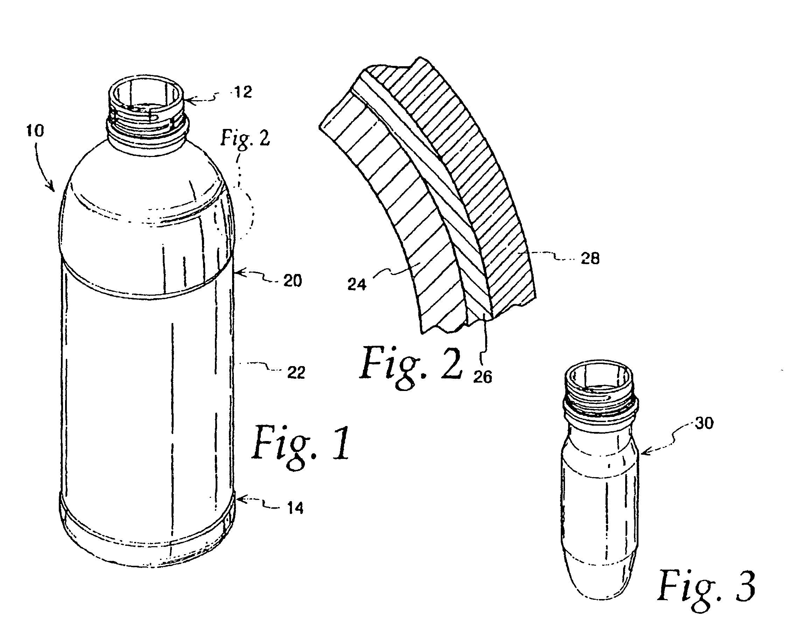

Referring now to FIG. 1, there is shown a transparent, multilayer plastic container, specifically a bottle 10, according to the teaching of the present invention. The bottle 10 has a top end 12 and a bottom end 14. A body portion 20 extends between the top end 12 and the bottom end 14 and forms a cylindrical wall 22. Although the container illustrated in FIG. 1 is a bottle, it is understood that various other containers can be made according to the present invention as well.

As best illustrated in the cross-sectional view of the body portion 20 shown in FIG. 2, the bottle 10 is preferably constructed of three layers, namely an inner layer 24, a middle layer 26 and an outer layer 28. Both the inner layer 24 and the outer layer 28 are made of a material comprising at least polypropylene and provide structural rigidity to the bottle 10. The polypropylene can be a homopolymer or a copolymer. The comonomer can be selected from the group consisting of ethylene, butylene, or other alpha-olefins from C₅-C₈. A preferred comonomer is ethylene wherein the ethylene is up to 3.0 weight % of the polypropylene copolymer.

The polypropylene may also contain additives such as clarifying agents to assist in providing the container with a substantially clear appearance. Clarifying agents are exemplified by Milliken Chemical, Division of Milliken & Co.'s Millad 3988 clarifying agent or Mitsui Toatsu Chemicals, Inc.'s NC4 clarifying agent. Other clarifiers such as sorbitol and benzoates can also be used. Such clarifying agents are typically present in the amount of 0.1-0.3% by weight of the polypropylene.

In one embodiment, the middle layer 26 is made of a material comprising at least an ethylene vinyl alcohol copolymer (EVOH). The middle layer 26 is of EVOH provides carbon dioxide and oxygen barrier that allows a product to be stored within the bottle 10 for an extended period of time without spoiling.
The middle layer may alternatively comprise any appropriate barrier material, such as nylon or a blend of ethylene vinyl alcohol copolymer and nylon. An appropriate nylon is exemplified by MXD6, nylon 6 and nylon 6/66. An appropriate adhesive (discussed in detail below) is chosen dependent upon the material of the middle layer 26 to bond the inner and outer layers 24, 28 thereto.

The inner and outer layers 24, 28 provide structural rigidity to the bottle 10 and provide additional moisture barrier protection for the product to be contained therein. The thickness of the inner and outer layers 24, 28 and the thickness of the middle layer 26 are determined by factors such as the type of product to be filled in the container, the desired shelf life of the product, whether or not the bottle will be hot-filled or retorted, etc. Typically the thickness of the layers are in the range of between approximately 12.5 to 25 x 10⁻⁶ m (5 mils to 10 mils) for each of the inner and outer layers 24, 28 and between approximately 0.25 to 5 x 10⁻⁶ m (0.1 mils to 2.0 mils) for the middle layer 26.

The bottle 10 can be stretch blow molded from a preform 30 such as that depicted in FIG. 3 by using conventional stretch blow molding techniques. Stretch blow moulding should impart sufficient biaxial orientation to the polypropylene, when performed under the appropriate conditions, to clarify the polypropylene to a near transparent state. The appropriate blowing conditions will depend on the preform configuration and the resulting bottle configuration, as will be recognised by one of ordinary skill in the art. In one embodiment, the preform 30 is made by an injection moulding process such as the injection moulding processes described in US Patent Nos. 4,511,528 and 4,712,990, which are hereby incorporated by reference. Alternatively, the bottle may be made by extrusion blow molding techniques, such as the process described in US Patent No 5,156,857, hereby incorporated by reference, if the properties associated with biaxial stretching are not required from container 10.

With regard to injection molding applications, the process temperatures of polypropylene and EVOH are approximately the same. Therefore, the process temperatures of the materials to comprise the inner and outer layers 24, 28 and the materials to comprise the middle layer 26 are approximately the same, despite the addition of adhesive (discussed in detail below) in at least one of the inner and outer layers 24, 28 and optionally the middle layer 26.

Accordingly, it is easier to maintain proper flow of the materials forming those respective layers 24, 26, 28. Moreover, it is easier to simultaneously maintain the proper flow temperatures of polypropylene and EVOH than to simultaneously maintain the relatively disparate flow temperatures of PET and EVOH. The process temperature of the polypropylene and EVOH is approximately between 180-235°C (with or without the adhesive discussed in detail below).

In order to bond each of the inner and outer layers 24, 28 to the middle layer 26, the material of at least one of the inner and outer layers 24, 28 and optionally the middle layer 26 comprises an adhesive therein. Thus, in a first embodiment of the present invention, the inner and outer layers 24, 28 may comprise a polypropylene and an adhesive ("polypropylene/adhesive mixture") while the middle layer 26 is comprised of EVOH without an added adhesive. In a second embodiment, the inner and outer layers 24, 28 comprise a polypropylene/adhesive mixture and the middle layer 26 comprises an EVOH/adhesive mixture. Examples of each embodiment are provided below

Sufficient adhesion for purposes of this invention means achieving a bond between the middle layer 26 and each of the inner and outer layers 24, 28 sufficient to prevent delamination during forming of the bottle 10 or other container and withstanding expected packaging, handling and distribution. For some applications, sufficient adhesion would also mean a sufficient bond between the layers to withstand hot filling of the container at temperatures of 190°-210°F or retort. The amount of adhesive used must also provide sufficient adhesion for purposes of injection molding the preform 30 and stretch blow molding the container 10 from the preform 30. Importantly, using the lowest possible percentage of adhesive is desirable because the adhesive is relatively expensive compared to polypropylene and because adhesives typically impart haze to the container 10. The use of the term adhesive herein is intended to incorporate any composition or agent which facilitates a tie between the inner and outer layers 24, 28 and the middle layer 26 such that sufficient adhesion is obtained therebetween to prevent delamination.

It has been found that the greater the percentage of adhesive evenly distributed within any layer of the bottle 10 (referred to herein as a "mixed-adhesive layer"), the better that layer will adhere to an adjacent layer. This correlation is due to two facts. First, the adhesive force that a mixed-adhesive layer may exert on an adjacent layer of a container depends, at least in part. upon the amount of adhesive available at the outer surface of that mixed-adhesive layer. Second, as the percentage of adhesive agent evenly distributed throughout any composite material used to construct a mixed-adhesive layer is increased. the amount of adhesive agent which will be exposed at an outer surface of that mixed-adhesive layer (and thereby made available for adhesion to an adjacent layer) will also necessarily increase. Additionally, the percentage of the adhesive agent in the mixed-adhesive layer, which is exposed at the outer surface of that mixed-adhesive layer, is inversely proportional to the thickness of that mixed-layer. That is, a thinner mixed-adhesive layer will produce greater adhesive potential from a given quantity of adhesive agent, than will a relatively thicker mixed-adhesive layer comprised of the same given quantity of adhesive agent.

From the foregoing it will be understood that because the middle layer 26 of the present invention is thinner (preferably between 0.25 and 5 x 10⁻⁶ m) (0.1 mils and 2.0 mils) than each of the outer layers 24, 28 (preferably between 12.5 and 25 x 10⁻⁶ m (5 mils and 10 mils)) dispersing an adhesive in the middle layer 26, as in the second preferred embodiment of the present invention, will necessarily decrease the amount of adhesive necessary to bond the inner and outer layers 24, 28 to the middle layer 26 relative to the first embodiment of the present invention in which the adhesive is dispersed within the inner and outer layers 24, 28.

In one embodiment of the present invention, it has been found that the objectives of the present invention are more readily achieved by maintaining homogeneous melt material flow streams during injection of the preform 30 such that fractures of the flow streams are reduced or eliminated.

Specifically, it has been found that reducing or eliminating flow stream fractures increases the homogeneity of container layers 24, 26, 28 and produces a concomitant reduction in haze present in the resultant container 10. Homogeneous flow streams may be obtained by maintaining the temperature of each flow streams only slightly above the melt temperature of the polymer. For example, a temperature of from 400°-500°F for blowmold grade polypropylene has been found to assist in maintaining homogeneous flow streams. Maintaining the flow streams at a slow, constant rate of injection has also been found to assist in maintaining their homogeneity. For example, an injection cavity fill time of from 3-10 seconds for the preform 30 depicted in FIG. 3 has been found to provide homogeneous flow streams. Additionally, injecting the preform 30 at a high compression ratio also assists in maintaining homogeneous flow streams. A compression ratio of from 3-3.5 has been found beneficial in maintaining homogeneous flow streams.

It has also been found that a high degree of control over the middle layer 26 is desirable during injection. For example, it is desirable to provide a relatively even flow front to the middle layer 26 about the circumference of the preform 30 during injection so that the finish of the container 10 may have barrier protection from the middle layer 26 thereabout without the barrier breaking through the uppermost portion of the finish to separate the inner layer 24 from the outer layer 28. It is also desirable to 'close' the middle layer 26 at the gate of the preform 30 so that the middle layer 26 is substantially continuous there across to assure barrier protection across the base of the container 10. Absence of barrier is substantially less tolerable in a container 10 employing polypropylene structural layers 24, 28 than containers employing other materials because of the relative permeability of polypropylene by oxygen and carbon dioxide. A high degree of control over the middle layer 26 may be exerted with standard apparatus and methods known to those of ordinary skill in the art.

The condition of the injection cavity, which receives the melt material flow streams to form the preform 30, may also reduce haze of the container 10 blown from the preform 30. Specifically, maintaining the injection cavity relatively cold will decrease the time required to cool the melt materials after they have reached the injection cavity to limit or eliminate the time in which growth of spherulites is possible in the polypropylene. For example, maintaining the injection cavity at a temperature of from 30°-80°F assists in cooling the preform 30 quickly enough to prevent the growth of spherulites in the polypropylene when the melt materials are injected at 400°-500°F over a fill time of from 3-10 seconds. Additionally, it has been found that employing an injection cavity having polished mold surfaces to mold the preform 30 also assists in clarifying the container 10 blowmolded therefrom.

Certain blowmolding process parameters have also been found to facilitate molding the container 10 consistent with the objectives of the present invention from the above-described preform 30. For example, reheating the preform 30 constructed of polypropylene copolymer to a temperature of 295°F (325°F for polypropylene homopolymer), by infrared or other known means, prior to stretch blowmolding of the preform 30 will assist in subjecting the preform 30 to sufficient biaxial stretching during the stretch blowmolding process to impart clarity to the polypropylene of the inner and outer layers 24, 28. Moreover, a blow pressure of 250 psi facilitating a radial stretch ratio of 2.5 and an axial stretch ratio of 2.2 of the preform into a mold cavity maintained at 55°F and holding that blow pressure for 4.75 seconds will secure an appropriate amount of biaxial stretching to provide a substantially clear container 10.

In one embodiment of the present invention, the bottle 10 is made having a haze value of less than approximately 29%. In another embodiment, the bottles have a haze value of 10-12%.

A haze value is defined as the percent of total light which, in passing through the specimen, deviates through forward scatter by more than 0.044 rad (2.5°) on the average. The preferred test to obtain the haze value of the bottle is ASTM Method D-1003 as defined in the 1995 Annual Book of ASTM Standards, Volume 8.01.

### First Embodiment

The adhesive used to make the polypropylene/adhesive mixture for the first embodiment of the present invention is a maleic anhydride modified polypropylene which comprises a maleic anhydride grafted onto a polypropylene in a predetermined ratio. The amount of adhesive grafted onto the polypropylene depends on the maleic anhydride concentration of the adhesive. Typically, enough adhesive must be added such that the resulting polypropylene/adhesive mixture has a maleic anhydride content of approximately 0.01%-0.20% by weight of the total mixture. (For example: 10% of adhesive containing 0.15% maleic anhydride.) The polypropylene/adhesive mixture can contain between 0-98% by weight polypropylene and between 2-100% by weight adhesive. As discussed above, the greater the percentage of adhesive used, the better the middle layer 26 will adhere to the inner an outer layers 24, 28. However, it has been found that sufficient adhesion between the layers is achieved using polypropylene/adhesive mixtures containing as low as approximately 0.01%-0.015% maleic anhydride. The middle layer 26, as provided by the prescripts of first embodiment, is comprised of EVOH without the presence of an adhesive therein.

The following are examples of the first embodiment of the present invention:

### EXAMPLE 1

A three-layer injection molded preform was made having inner and outer structural layers 24 and 28 which are made from a polypropylene/adhesive mixture containing about 85% polypropylene and 15% grafted adhesive and a middle layer 26 of EVOH. The polypropylene was Solvay 4285. The adhesive was Morton EFM-2E02. The EVOH selected for the middle layer 26 was Evalca LCE-105A (having a 44% ethylene content). The preform was then stretch blow molded to form a substantially transparent container having a haze value of approximately 10-12% measured through a section of the bottle having a thickness of approximately 15-20 mils.

### EXAMPLE 2

A multilayer injection molded preform was made as in Example 1 except that the percentages of polypropylene and adhesive in the inner and outer layers 24, 28 were 90% polypropylene and 10% grafted adhesive. The preform was stretch blow molded to form a substantially transparent container having a haze value of approximately between 10-12% measured through a section of the container having a thickness of approximately 15-20 mils.

### EXAMPLE 3

A three-layer container was made by a coextrusion blow molding process. The layers were extruded together to form a tube. The tube was blow molded in a mold to form the container. The layers 24 and 28 were made from a polypropylene/adhesive mixture containing about 90% polypropylene and 10% grafted adhesive. The polypropylene was Montell SR256M. The adhesive is Morton EFM-2E02. The EVOH selected for the middle layer 26 was Evalca LCE-105A.

### EXAMPLE 4

A multilayer injection molded preform was made as in Example 1 except that the EVOH used was Evalca LCF-104AW (having a 32% ethylene content). The preform was then stretch blow molded to form a substantially transparent container.

### EXAMPLE 5

A multilayer injection molded preform was made as in Example 1 except that the EVOH used was Evalca LCL 101A (having a 27% ethylene content). The preform was then stretch blow molded to form a transparent container.

### EXAMPLE 6

A multilayer injection molded preform was made as in Example 1 except that the EVOH used was Nippon Gohsei Soarnol DC3203. The preform was then stretch blow molded to form a substantially transparent container.

### EXAMPLE 7

A multilayer injection molded preform was made as in Example 1 except that the barrier was nylon, specifically Mitsubishi's MXD6-6121 nylon. The preform was then stretch blow molded to form a substantially transparent container.

### EXAMPLE 8

A multilayer injection molded preform was made as in Example 1 except that the polypropylene was Fina 7426MZ. The preform was then stretch blow molded to form a substantially transparent container.

### EXAMPLE 9

A multilayer injection molded preform was made as in Example 1 except that the polypropylene was Montell SR256M. The preform was then stretch blow molded to form a substantially transparent container.

### EXAMPLE 10

A multilayer injection molded preform was made as in Example 1 except that the inner and outer structural layers 24 and 28 were 100% Mitsui Admer QB510A. The preform was then stretch blow molded to form a substantially transparent container.

### EXAMPLE 11

A multilayer injection molded preform was made as in Example 1 except that the percentages of polypropylene and adhesive in the inner and outer structural layers 24, 28 were comprised of 90% polypropylene and 10% grafted adhesive, the polypropylene was Solvay KB4285, the adhesive was DuPont Bynell 50E571 and the EVOH was Evalca LC-E105. The preform was then stretch blow molded to form a substantially transparent container.

### EXAMPLE 12

A multilayer injection molded preform was made as in Example 11 except that the EVOH was Evalca F104BW. The preform was then stretch blow molded to form a substantially transparent container.

### EXAMPLE 13

A multilayer injection molded preform was made as in Example 11 except that the polypropylene was Amoco 8649-X, the grafted adhesive was Morton EFM-2E02 and the EVOH was Evalca LC-E105A. The preform was stretch blow molded to form a substantially transparent container.

### EXAMPLE 14

A multilayer injection molded preform was made as in Example 11 except that the polypropylene was Amoco 8649-X, the grafted adhesive was Morton EFM-2E02 and the EVOH was Evalca F104BW. The preform was stretch blow molded to form a substantially transparent container.

### EXAMPLE 15

A multilayer injection molded preform was made as in Example 2 except that the EVOH was Evalca LC-E105. Interlayer adhesion was obtained. No container was blown.

### EXAMPLE 16

A multilayer injection molded preform was made as in Example 2 except that the polypropylene was Montel X-11651 and the EVOH was Evalca F104BW. The preform was stretch blow molded to form a substantially transparent container.

### EXAMPLE 17

A multilayer injection molded preform was made as in Example 1 except that the inner and outer structural layers 24 and 28 were comprised of 80% polypropylene, 10% grafted adhesive and 10% EVOH. The polypropylene was Solvay KB4285. The EVOH was Evalca F104BW. The adhesive was DuPont Bynell 50E571. Interlayer adhesion was obtained. No container was blown.

The bottles achieved in Examples 1-14 and 16 of the first embodiment above are substantially transparent, exhibit good strength and provide excellent carbon dioxide. oxygen and moisture barrier protection.

### Second Embodiment

The polypropylene employed for the polypropylene/adhesive mixture for the inner and outer layers 24, 28 of the second embodiment was Solvay 4285 and the EVOH employed for the EVOH/adhesive mixture for the middle layer 26 was Evalca F104BW. The adhesive employed for all layers was Morton 2E02.

The following is an example of the second embodiment of the present invention:

### Example 1

A three-layer injection molded preform was made having inner and outer structural layers 24, 28 made from 95% polypropylene with 5% adhesive grafted thereto. The middle layer 26 was made from 50% EVOH resin and 50% adhesive. The preform exhibited excellent interlayer adhesion. No container was blown.

From the foregoing description, it will be apparent that the transparent multilayer polypropylene containers having a barrier layer of the present invention have a number of advantages, some of which have been described above and others of which are inherent in the transparent multilayer polypropylene containers of the present invention. Also, it will be understood that modifications can be made to the transparent multilayer polypropylene containers having a barrier layer of the present invention without departing from the teachings of the invention. Accordingly the scope of the invention is only to be limited as necessitated by the accompanying claims.

## Claims

1. A multilayer container comprising:
a first layer being an innermost or outermost layer comprising polypropylene; and
a second layer comprising an oxygen barrier material directly adjacent to said first layer;
wherein at least said first layer further comprises an adhesive.

2. A multilayer container as claimed in Claim 1 comprising:
a first layer being an innermost or outermost layer comprising polypropylene; and
a second layer comprising an oxygen barrier material selected from the group consisting of EVOH and nylon, directly adjacent to the first layer;
wherein at least said first layer further comprises an adhesive.

3. The container as claimed in claim 1 or claim 2 wherein the first layer comprises 0.01% to 0.20% maleic anhydride.

4. The container as claimed in any preceding claim wherein said first layer contains 0.015% maleic anhydride.

5. The container as claimed in any preceding claim wherein said container has a haze value of less than 29% measured through a section of the container having a total thickness of greater than 37.5 x 10⁻⁶ m (15 mils).

6. The container as claimed in any preceding claim wherein said container has a haze value of 10%-12% measured through a section of the container having a total thickness of greater than 37.5 x 10⁻⁶ m (15 mils).

7. The container as claimed in any preceding claim wherein said second layer comprises EVOH.

8. The container as claimed in any preceding claim wherein said second layer comprises MXD6 nylon.

9. The container as claimed in any of claims 1 to 7 wherein said second layer comprises nylon 6.

10. The container as claimed in any of claims 1 to 7 wherein said second layer comprises nylon 6/66.

11. A multilayer container as claimed in claim 1 consisting of:
an innermost layer comprising polypropylene;
a middle layer comprising an oxygen barrier material; and
an outermost layer comprising polypropylene;
wherein at least said innermost and said outermost layer further comprise an adhesive.

## Patentansprüche

1. Ein Mehrschichtbehälter, der Folgendes beinhaltet:
eine erste Schicht, die eine innerste oder äußerste Polypropylen beinhaltende Schicht ist; und
eine zweite Schicht, die ein direkt an die erste Schicht anliegendes Sauerstoff-Sperrschichtmaterial beinhaltet, wobei mindestens die erste Schicht ferner einen Klebstoff beinhaltet.

2. Mehrschichtbehälter gemäß Anspruch 1, der Folgendes beinhaltet:
eine erste Schicht, die eine innerste oder äußerste äußerste Polypropylen beinhaltende Schicht ist; und
eine zweite Schicht, die ein direkt an die erste Schicht anliegendes Sauerstoff-Sperrschichtmaterial, das aus der Gruppe, bestehend aus EVOH und Polyamid, ausgewählt ist, beinhaltet;
wobei mindestens die erste Schicht ferner einen Klebstoff beinhaltet.

3. Behälter gemäß Anspruch 1 oder Anspruch 2, wobei die erste Schicht 0,01 % bis 0,20 % Maleinsäureanhydrid beinhaltet.

4. Behälter gemäß einem der vorhergehenden Ansprüche, wobei die erste Schicht 0,015 % Maleinsäureanhydrid enthält.

5. Behälter gemäß einem der vorhergehenden Ansprüche, wobei der Behälter einen Trübungswert von weniger als 29 %, gemessen durch einen Querschnitt des Behälters mit einer Gesamtstärke von mehr als als 37,5 x 10⁻⁶ m (15 mil), aufweist.

6. Behälter gemäß einem der vorhergehenden Ansprüche, wobei der Behälter einen Trübungswert von 10 %-12 %, gemessen durch einen Querschnitt des Behälters mit einer Gesamtstärke von mehr als 37,5 x 10⁻⁶ m (15 mil) aufweist.

7. Behälter gemäß einem der vorhergehenden Ansprüche, wobei die zweite Schicht EVOH beinhaltet.

8. Behälter gemäß einem der vorhergehenden Ansprüche, wobei die zweite Schicht MXD6-Polyamid beinhaltet.

9. Behälter gemäß Anspruch 1 bis 7, wobei die zweite Schicht Polyamid 6 beinhaltet.

10. Behälter gemäß Anspruch 1 bis 7, wobei die zweite Schicht Polyamid 6/66 beinhaltet.

11. Mehrschichtbehälter gemäß Anspruch 1, der Folgendes enthält:
eine innerste Polypropylen beinhaltende Schicht;
eine mittlere, ein Sauerstoff-Sperrschichtmaterial beinhaltende Schicht; und
eine äußerste Polypropylen beinhaltende Schicht;
wobei mindestens die innerste und die äußerste Schicht ferner einen Klebstoff beinhalten.

## Revendications

1. Un contenant multicouche comportant :
une première couche qui est une couche la plus intérieure ou la plus extérieure comportant du polypropylène ; et
une deuxième couche comportant un matériau formant barrière contre l'oxygène directement adjacente à ladite première couche ;
dans lequel au moins ladite première couche comporte de plus un adhésif.

2. Un contenant multicouche tel que revendiqué dans la revendication 1 comportant :
une première couche qui est une couche la plus intérieure ou la plus extérieure comportant du polypropylène ; et
une deuxième couche qui comporte un matériau formant barrière contre l'oxygène sélectionné dans le groupe consistant en EVOH et en nylon, directement adjacente à la première couche ;
dans lequel au moins ladite première couche comporte de plus un adhésif.

3. Le contenant tel que revendiqué dans la revendication 1 ou la revendication 2 dans lequel la première couche comporte de 0,01 % à 0,20 % d'anhydride maléique.

4. Le contenant tel que revendiqué dans n'importe quelle revendication précédente dans lequel ladite première couche contient 0,015 % d'anhydride maléique.

5. Le contenant tel que revendiqué dans n'importe quelle revendication précédente dans lequel ledit contenant a une valeur de turbidité inférieure à 29 % mesurée sur une coupe du contenant ayant une épaisseur totale supérieure à 37,5 x 10⁻⁶ m (15 mils).

6. Le contenant tel que revendiqué dans n'importe quelle revendication précédente dans lequel ledit contenant a une valeur de trouble de 10% à 12% mesurée sur une coupe du contenant ayant une épaisseur totale supérieure à 37,5 x 10⁻⁶ m (15 mils).

7. Le contenant tel que revendiqué dans n'importe quelle revendication précédente dans lequel ladite deuxième couche comporte de l'EVOH.

8. Le contenant tel que revendiqué dans n'importe quelle revendication précédente dans lequel ladite deuxième couche comporte du nylon MXD6.

9. Le contenant tel que revendiqué dans n'importe lesquelles des revendications 1 à 7 dans lequel ladite deuxième couche comporte du nylon 6.

10. Le contenant tel que revendiqué dans n'importe lesquelles des revendications 1 à 7 dans lequel ladite deuxième couche comporte du nylon 6/66.

11. Un contenant multicouche tel que revendiqué dans la revendication 1 consistant en :
une couche la plus intérieure comportant du polypropylène ;
une couche médiane comportant un matériau formant barrière contre l'oxygène ; et
une couche la plus extérieure comportant du polypropylène ;
dans lequel au moins ladite couche la plus intérieure et ladite couche la plus extérieure comportent de plus un adhésif.
